# EUROPEAN PATENT APPLICATION

(11) **EP 1 199 491 A1**
(43) Date of publication of application: **24.04.2002**
(21) Application number: 00309146.9
(22) Date of filing: 17.10.2000
(51) Int. Cl.: F16D 66/02

(54) **Block of friction material with integrated wear sensor**

(71) Applicant: Federal-Mogul Friction Products GmbH, 65520 Bad Camberg (DE)
(72) Inventor: Emmett, Robert Allen, 56477 Rennerod (DE); Strauss, Wilfried, 69483 Wald-Michelbach (DE); Hobson, Craig Richard, Warwickshire CV22 6ET (GB)
(74) Representative: Drury, Peter Lawrence

(57) **Abstract**

A block of friction material (10;30) defines a friction surface (10b) for engaging a member to apply a frictional force to the member. The block (10;30) has an electrically-conducting member contained therein. The electrically-conducting member is in the form of a sheet of foil (16). The sheet of foil (16) can be connected to an electrical circuit for monitoring wear of the block (10;30) in service.

## Description

This invention is concerned with a block of friction material.

In many types of brake, a frictional braking force is applied to a moving member by pressing a block of friction material into engagement with the member. For example, in a disc brake for a vehicle, a block of friction material is pressed against an annular planar side surface of the moving disc. At the same time, a similar block of friction material is pressed against an opposite side surface of the disc. The blocks are supported against movement circumferentially of the disc so that frictional braking forces are created on both sides of the disc, reducing its rotational speed.

A block of friction material defines a surface, referred to herein as "a friction surface", which is for engaging a member to apply a frictional force to the member. The friction surface is usually parallel to the surface of the member which the block engages. Thus, in the case of the above-mentioned disc brake, the friction surfaces of the blocks are planar. In blocks intended to engage the inner surface of a drum of a drum brake, the friction surface is in the form of part of a convex cylinder. In blocks intended to engage a convex surface, for example the periphery of a wheel, the friction surface is in the form of part of a concave cylinder. In many cases, the block is mounted on a backing plate which extends parallel to the friction surface on the opposite side of the block. In some cases, for example where the block is mounted between two discs of a multi-disc disc brake, the block has more than one friction surface. The invention is applicable to blocks of friction material for brakes of any of these types and for other purposes.

During service, the friction surface of a block of friction material wears away reducing the thickness of the block. If the block is not replaced before it is reduced to a critical extent, eg before it is completely worn through, braking force can be lost with potentially serious consequences. It is important, therefore, to monitor the wear of blocks of friction material. This can be done visually but that is inconvenient. Accordingly, the need for an automatically-operating monitor of the wear of a block of friction material has been recognised.

In one form of wear monitor which has been proposed for use in disc brakes, an electrically-conductive wire is contained within the block of friction material. An end of the wire is positioned at a distance from the friction surface, said distance being judged to correspond to an approach to critical wear. The wire is connected, through the support of the block, to an electrical circuit to which the disc is also connected. When sufficient wear has occurred, the disc contacts the end of the wire, completing the circuit and thereby causing operation of a warning device. However, this type of monitor has the disadvantage that it can only provide an indication that wear has progressed to a particular extent at a particular point.

It is an object of the present invention to provide a block of friction material which enables use of an improved automatically-operating monitor of the wear of the block of friction material.

The invention provides a block of friction material, the block defining a friction surface for engaging a member to apply a frictional force to the member, the block having an electrically-conducting member contained therein, characterised in that the electrically-conducting member is in the form of a sheet of foil.

A block according to the invention can be used with an automatically-operating monitor of the wear of the block of friction material of the type referred to above. In that case, the sheet of foil can cover a greater area than the afore-mentioned wire, by being arranged so that the sheet is equi-distant from the friction surface, ie so that the plane of the sheet is substantially parallel to the friction surface. Alternatively, an area may be covered by the sheet being arranged so that the sheet extends in a direction which is towards-and-away from the friction surface, ie so that the plane of the sheet is substantially normal to the friction surface or makes an angle, preferably an acute angle, to the normal to the friction surface, and the edge of the sheet which is nearest to the friction surface following a path around and/or through said area.

A block according to the invention can, alternatively, be used with an automatically-operating monitor of the wear of the block of friction material which is different from the type referred to above. For example, such a monitor may be arranged to detect continuously, or on demand the amount of wear which has occurred in the block. Such a monitor may detect change of electrical resistance as the sheet of foil wears away. In this case, in order to enhance the effect, the sheet may taper in width either towards or away from the friction surface. Such a monitor may, alternatively, detect change of inductance as the foil wears away. In this and other cases, the sheet may be formed into a closed loop, eg a flat loop, such as an annular loop, or an elongated loop such as a cylinder, a cone, or a frusto-cone. Another alternative is for the sheet to be die-cut or otherwise formed into a multi-component portion of an electrical component and the connections between the components. For example, the sheet may be formed as a plurality of resistors, capacitors, or inductors connected in series or parallel, or as resistors arranged in a Wheatstone bridge.

In order to reduce any weakening of the friction material, the sheet of foil may be perforated by holes in which friction material is received.

The sheet of foil is preferably of substantially constant thickness and less than 1mm thick. Preferably, the sheet is less than 0.5mm, more preferably less than 0,2mm, in thickness. A sheet 0.1mm in thickness and made from the alloy known as "Constantan" is suitable in some cases.

The sheet of foil may be coated with electrically-insulating material, in order to prevent electrically-conducting components in the friction material or its backing plate from affecting the monitor's output.

Preferably, the sheet of foil is electrically connected to a plug or a socket. Such a plug or socket may be mounted in a recess in the backing plate of the friction material. Such a recess may be cast-in if the plate is a casting.

There now follow detailed descriptions, to be read with reference to the accompanying drawings, of two blocks of friction material which are illustrative of the invention.

In the drawings:
Figure 1 is a diagrammatic cross-sectional view taken through the first illustrative block; and
Figure 2 is a plan view, on a reduced scale, of the second illustrative block.

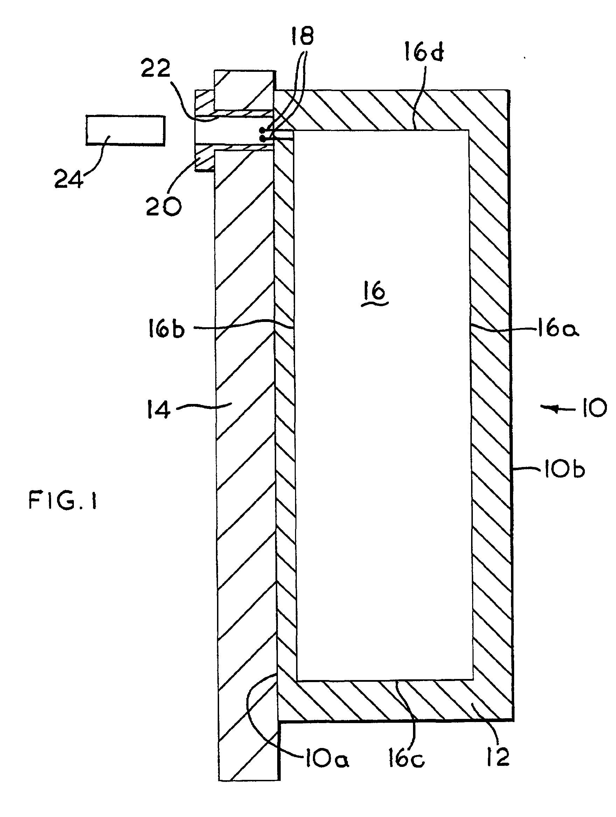

The first illustrative block 10 shown in Figure 1 is a block of friction material 12 for use in a disc brake. Specifically, the friction material 12 is of the conventional type which comprises particulate materials bonded together by phenolic resin. The friction material 12 is adhered to a cast iron backing plate 14.

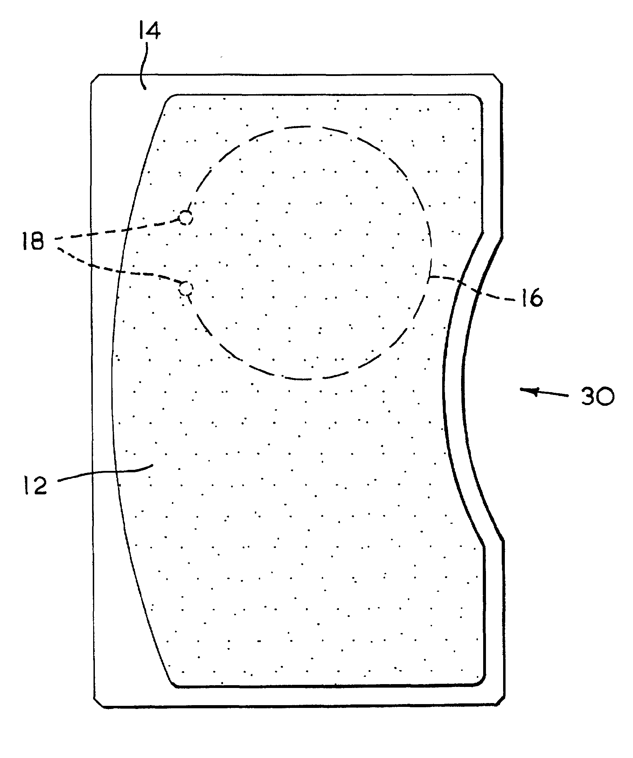

The block 10 is generally rectangular in transverse cross-section as shown in Figure 1 and, in plan view, has the same shape as the block shown in Figure 2. The block 10 is bounded by a planar surface 10a which engages and is adhered to the backing plate 14 and a planar surface 10b which extends parallel to the surface 10a on the opposite side of the block 10, ie the surfaces 10a and 10b are spaced from one another by the thickness of the block 10 and face in opposite directions. The surface 10b is a friction surface of the block 10 for engaging a rotor of the disc brake (not shown) to apply a frictional force to the rotor.

The block 10 has an electrically-conducting member in the form of a rectangular sheet of foil 16 contained therein. The sheet 16 is made of the alloy known as Constantan and is 0.1mm in thickness. The sheet 16 is coated on both of its major surfaces with a thin layer of electrically-insulating plastics material. The sheet 16 extends through most of the thickness of the friction material 12 but without reaching the surfaces 10a and 10b. The sheet 16 is arranged so that the plane of the sheet 16, ie the plane of its major surfaces, is substantially normal to the friction surface 10b. In other words, one of the longer edges 16a of the sheet 16 extends parallel to the friction surface 10b and is adjacent thereto and the other longer edge 16b of the sheet 16 extends parallel to the surface 10a and is adjacent thereto. The sheet 16 extends in a substantially straight line across most of the width of the block 10 so that the shorter edges 16c and 16d of the sheet extend parallel to and are adjacent to the sides of the block 10.

The shorter edges 16c and 16d are both connected to electrically-conducting wires 18 which extend through the friction material 12 to a socket 20 which is mounted on the backing plate 14. Specifically, the socket 20 is mounted in a recess 22 of the plate 14 which was cast-in when the plate 14 was cast. The socket 20 is arranged to receive a plug 24 to connect the wires 18 to a resistance-measuring electrical circuit (not shown). The measuring circuit provides an automatically-operating monitor of the wear of a block 10 during the operation of the disc brake. Specifically, the measuring circuit measures the electrical resistance between the wires 18 caused by the presence of the sheet 16. The measurements are taken when the disc brake is in a brakes-on condition in which the block 10 is pressed against the rotor of the disc brake.

When the block 10 has newly been installed in the disc brake, the measuring circuit does not detect any wear because the layer of friction material 12 between the edge 16a of the sheet 16 and the friction surface 10b electrically insulates the sheet 16 from the rotor. If the friction material 12 is electrically conductive, the insulation can be achieved by a thin layer of insulation material on the sheet 16. When the block 10 has worn sufficiently (or when any insulation layer has worn through), the rotor contacts the edge 16a, completing an electrical circuit through the rotor and the sheet 16. Completion of the circuit allows the measurement of the electrical resistance of the sheet 16 and indicates that wear has progressed as far as the edge 16a. As wear of the block 10 continues, the sheet 16 is worn away with the friction material 12, thereby reducing the width of the sheet 16 and increasing its electrical resistance. The measuring circuit detects this increase in resistance which corresponds to the measurement of the progressive wear of the block 10.

In the manufacture of the first illustrative block 10, the sheet 16 and the wires 18 are positioned in a die cavity, particulate material including uncured phenolic resin is introduced into the cavity so that the particulate material surrounds the sheet 16 and the wires 18, and the backing plate 14 is positioned over an opening to the cavity so that the backing plate contacts the particulate material and the wires extend into the recess 22. The particulate material is then compressed against the backing plate 14 and the phenolic resin is cured to bind the particulate material together to form the friction material 12 which has the sheet 16 and the wires 18 contained or embedded therein. A modification of the block 10 may be manufactured by first forming the friction material from particulate material bound together by cured binder, machining a slot into the block, inserting the sheet 16 into the slot, and securing the sheet 16 in position, eg by adhesive.

The second illustrative block 30 shown in Figure 2 is similar to the first illustrative block 10, except as described below, and like reference numerals are used for like parts without further description. The block 30 differs from the block 10 in that the sheet 16 of foil does not extend in a straight line across the block 30 but instead extends along a path which is generally circular but has a gap therein bounded by the shorter edges 16c and 16d of the sheet 16 which, accordingly, do not contact one another. In this way, the sheet 16 can be used to monitor wear in the area of the block 10 where the path of the sheet 16 is located. If desired, one or more further sheets 16 can be positioned in other areas of the block 30 so that wear in different areas can be individually monitored.

## Claims

1. A block (10) of friction material, the block defining a friction surface (10b) for engaging a member to apply a frictional force to the member, the block having an electrically-conducting member (16) contained therein, **characterised in that** the electrically-conducting member is in the form of a sheet of foil.

2. A block according to claim 1, **characterised in that** the sheet (16) of foil is arranged so that the plane of the sheet is substantially parallel to the friction surface (10b).

3. A block according to claim 1, **characterised in that** the sheet (16) of foil is arranged so that the plane of the sheet is substantially normal to the friction surface (10b) or makes an angle to the normal to the friction surface.

4. A block according to claim 3, **characterised in that** the sheet (16) of foil tapers in width either towards or away from the friction surface (10b).

5. A block according to any one of claims 1 to 3, **characterised in that** the sheet (16) of foil is formed into a closed loop.

6. A block according to any one of claims 1 to 5, **characterised in that** the sheet (16) of foil is die-cut or otherwise formed into a multi-component portion of an electrical component and the connections between the components.

7. A block according to any one of claims 1 to 6, **characterised in that** the sheet (16) of foil is perforated by holes in which friction material (12) is received.

8. A block according to any one of claims 1 to 7, **characterised in that** the sheet (16) of foil is less than 0.2mm in thickness.
